# EUROPEAN PATENT SPECIFICATION

(11) **EP 1 686 737 B1**
(45) Date of publication and mention of the grant of the patent: **30.01.2008**
(21) Application number: 05425037.8
(22) Date of filing: 31.01.2005
(51) Int. Cl.: H04L 12/56

(54) **Method of protecting access to ports of a layer-2 switch, and layer-2 switch implementing the method**
Verfahren zur Sicherung des Zugriffs auf Ports von einem Ebene-2-Switch und Ebene-2-Switch, der das Verfahren implementiert
Procédé pour sécuriser l'accès aux ports d'un commutateur de couche 2 et commutateur de couche 2 mettant en oeuvre le procédé

(43) Date of publication of application: 02.08.2006
(73) Proprietor: Nokia Siemens Networks GmbH & Co. KG, 81541 München (DE)
(72) Inventor: Mastrangelo, Anna Rita, 65012 Cepagatti (PE) (IT)

(56) References cited:
- IC PLUS CORP: "18-port 10/100Mbps Smart Switch Controller" DATA SHEET, [Online] 27 January 2005 (2005-01-27), pages 1-33, XP002339591 Retrieved from the Internet: URL:http://www.icplus.com.tw/Data/Datashee t/IP1718-DS-R05-01272005.pdf> [retrieved on 2005-07-08]
- GURUPRASAD A ET AL: "Security features in ethernet switches for access networks" IEEE TENCON 2003. CONFERENCE ON CONVERGENT TECHNOLOGIES FOR THE ASIA-PACIFIC REGION. BANGALORE, INDIA, OCT. 15 - 17, 2003, IEEE REGION 10 ANNUAL CONFERENCE, NEW YORK, NY : IEEE, US, vol. VOL. 4 OF 4. CONF. 18, 15 October 2003 (2003-10-15), pages 1211-1214, XP010687456 ISBN: 0-7803-8162-9
- MISHRA S M ET AL: "A configurable, QoS-aware ethernet l2+ switch optimized for access networks" LOCAL COMPUTER NETWORKS, 2002. PROCEEDINGS. LCN 2002. 27TH ANNUAL IEEE CONFERENCE ON 6-8 NOV.2002, PISCATAWAY, NJ, USA,IEEE, 6 November 2002 (2002-11-06), pages 725-727, XP010628232 ISBN: 0-7695-1591-6

## Description

### Field of the invention

The present invention refers to packet communication networks, and more particularly it concerns a method of protecting access to ports of a Medium Access Control (MAC) bridge, commonly referred to also as "layer-2 switch", used in such networks, and to a MAC bridge implementing the method.

In the present description, the terms "bridge" and "switch" will often be used as synonyms.

### Background of the invention

A MAC bridge is an internetworking device that relays frames among its ports based upon Data Link layer information [e.g., MAC (Medium Access Control) addresses and/or VLAN (Virtual Local Area Network) identifiers].

The basic features of a MAC bridge are defined for instance in IEEE Standard 802.1 D^{™} of the Institute of Electrical and Electronics Engineers, "Media Access Control (MAC) Bridges", the latest version of which has been released on 9th June 2004, and in related standards of other standardisation bodies, such as the ISO (International Standard Organisation).

Strictly speaking, a bridge allows end stations connected thereto to communicate transparently, as if they were on a same LAN (Local Area Network), regardless of their relative location and on the technologies they use on the LAN. For sake of clarity of the description, reference will be made where necessary to networks based on Ethernet technology.

The bridge ports are interfaces to LAN or WAN (Wide Area Network) links and could provide Ethernet links with identical and/or different line speeds. Any port has to comply with IEEE 802.3 Standard, "CSMA/CD networks", the latest version of which has been released 8 March 2002.

The network comprising the bridge is often shared by different groups of customers, so that the network is to be logically divided into a plurality of subnetworks. If information belonging to a subnetwork is not to be made available to users of other subnetworks, or if only specific information is to be shared among different subnetworks, problems of security arise.

A typical solution for addressing the security issues and providing a secure connection between certain bridge ports is using a bridge with VLAN capabilities. VLAN capability is provided in bridged networks compliant with IEEE 802.1Q^{™} standard, "Virtual Bridged Area Networks", May 2003.

As known, a VLAN is a switched network that is logically segmented by function, project team, or application, without regard to the physical locations of the users. The VLAN technique applied to a bridge provides a mechanism to logically separate a single bridge into several independent logical entities. This mechanism ensures that stations connected to ports that are not members of the VLAN do not receive broadcasts, and that data traffic produced by a station in one VLAN is delivered only to stations within that same VLAN. The VLAN-selective operation is allowed by the insertion of additional fields, including a VLAN identifier, in the Ethernet frames to be transferred through the bridge. Thus, by creating a VLAN including only the ports to be connected in secure manner, the security problem could be solved.

This mechanism is sufficient if no interaction between the subnetwork corresponding to that VLAN and other subnetworks is admitted. When an information exchange is to be allowed between different subnetworks, so that one or more of the ports concerned by the secure connection must communicate with other bridge ports, the use of the VLAN mechanism originates a number of problems.

First, having a VLAN with a port in common with other VLANs connected to the bridge is substantially a violation of the VLAN concept.

Second, a common application requiring such a shared use of a VLAN port is in managed bridges, in order to protect the connection through the bridge between an external manager and a switch controller, which has on the one side to exchange management message with the manager and on the other side to exchange dynamic protocol messages with the other ports. In such case a VLAN is to be reserved to the management and cannot be used by the network customers. Since the number of VLANs in any Layer-2 switch is limited, there is reduction in the network capacity.

Moreover, the network manager must make the corresponding VLAN identifier unavailable to the customers: this entails a use of the VLAN identifiers different from that provided for by IEEE 802.1Q standard, according to which only two VLAN identifiers cannot be used by the network.

Further, since a port is shared among different subnetworks, the risk exists that a subnetwork disturbs another one through a message bombardment. In particular, if the reserved VLAN is devoted to switch management purposes, as in the application mentioned above, a bombardment of messages by a malicious customer could even lead to the collapse of the manager's facilities, since any message arriving at the CPU port is seen as arriving from the same VLAN as the manager's one. Indeed, in such situations, the possible "broadcast/multicast storm" control provided in the switch would intervene only upon detection of a critical situation at the CPU port, but in the meanwhile the manager's equipment is engaged in the analysis of useless messages and cannot perform its usual operation.

IC PLUS CORP. "18-port 100 mbps Smart Switch Controller", DATA SHEET, 27 January 2005, pages 1 - 33, XP 002339591, Retrieved from the Internet, URL:http://www.icplus.com.tw/Data/Datasheet/IP1718-DS-R05-01272005.pdf, discloses the basic security mechanisms recited in the preambles of claims 1 and 10. The basic security mechanisms provided by said features are insufficient for a secure protection of the CPU and management ports from malicious attacks that could lead to a collapse of a whole apparatus.

GURUPRASAD A. et al "Security features in ethernet switches for access networks", IEEE TENCON 2003, CONFERENCE ON CONVERGENT TECHNOLOGIES FOR THE ASIA PACIFIC REGION, BANGALORE, INDIA, OCT. 15 - 17, 2003, IEEE REGION 10 ANNUAL CONFERENCE, NEW YORK, NY, IEEE, US, vol. VOL. 4 OF 4, CONF. 18, 15 October 2003, pages 1211 - 1214, XP010687456, ISBN:0-7803-8162-9 discloses a commercial switch with some VLAN-based security features. Thus, what has been stated above in respect of the VLAN approach applies also in this case.

MISHRA S.M. ET AL. "A configurable, QoS-aware ethernet 12+ switch optimized for access networks", LOCAL COMPUTER NETWORKS, 2002, PROCEEDINGS. LCN 2002. 27TH ANNUAL CONFERENCE ON, 6-8 NOV. 2002, PISCATAWAY, NJ, USA, IEEE, 6 November 2002m pages 725 - 727, XP010628232, ISBN:0-7695-1591-6, discloses the block diagram of the switch disclosed in GURUPRASAD et al. Only VLAN based security is mentioned.

Thus, it is an object of the present invention to provide a more efficient mechanism of protecting access to ports of a layer-2 switch, in particular the CPU port and a management port, so as to provide a secure connection between such ports.

### Summary of the invention

To achieve this object there is provided, in a first aspect, a method of protecting access to a first port in a MAC bridge where said first port has to exchange packets relevant to messages of a first type with a second port and packets relevant to messages of a second type with further ports, wherein the method comprises the steps of:
- disabling MAC learning from said first port;
- removing said first and second ports from a flooding table of the bridge, to prevent transmission of unknown packets and broadcast messages to the same ports;
- setting packet processing rules, based on source ports, destination addresses and types of packets arriving at the bridge, in order to allow access by said second port to said first port, for the only exchange of packets relevant to said first message type and to allow access by said further ports to said first port for the only exchange of packets relevant to said second message type.

According to the invention, said first port is a control port to which a bridge controller is connected, said second port is a management port to which external managing units are connected, said further ports are customer ports, said first message type includes management messages, and said second message type includes dynamic protocol messages.

According to another aspect of the invention, there is provided a MAC bridge implementing the method, as defined in claim 11.

### Brief description of the drawings

Further objects, characteristics and advantages of the invention will become apparent from the following description of preferred embodiments, given by way of non-limiting example and illustrated in the accompanying drawings, in which:
- Fig. 1 is a block diagram showing the preferred application of the invention to protecting the connection between the CPU port and the management port of a managed bridge;
- Fig. 2 is a flow chart of the method of the invention, in the preferred application;
- Fig. 3 is a flow chart of the packet flow inside a bridge configured according to the invention.

### Description of the preferred embodiments

The invention will now be described in greater detail referring to its application in a layer-2 (L2) switch or MAC bridge of managed type, that is a switch controlled by an external manager which can modify the L2 switch configuration and check alarms and performance of the switch. In such application, the ports to be connected in secure way are the CPU (or control) port to which a switch controller is connected and the management (MNG) port allowing communication with the external manager. More particularly, in the exemplary application of the invention described here, the switch is assumed to be a peripheral card of a network element (NE) providing for instance Ethernet and SDH/SONET services.

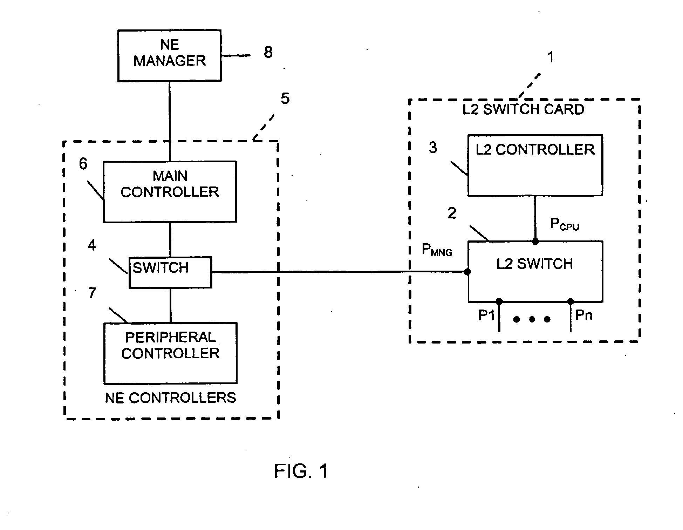

Turning to Fig. 1, dashed-line block 1 denotes an L2 switch card, forming the MAC bridge and including the actual switching fabric (L2 switch) 2 and an internal controller (L2 controller) 3. Block 3 is assumed to include all elements needed in order the switch can suitably process any received packet and take the proper decisions on what to do of it. As said, controller 3 is connected to CPU port of switch 2, denoted by symbol P_{CPU}. Symbol P_{MNG} in turn denotes the management port

Switch 2 is for instance a device of a kind having a plurality of Fast Ethernet (FE) and/or Gigabit Ethernet ports, with CPU port P_{CPU} and MNG port P_{MNG} being for instance two of the FE ports of the card. The other ports P1...Pn (customer ports) are devoted to handling data traffic coming from the customers and can have access to CPU port P_{CPU} for the exchange of dynamic protocol messages required by the normal bridge operation. Access to P_{CPU} must take place in such a manner that security of the connection between P_{CPU} and P_{MNG} is not affected.

Devices like switch 2 are commercially available, an example being the Infineon Purple PLB2800. The exemplary embodiment of the invention described here is just based on the use of such device.

Through management port P_{MNG}, switch 2 is connected to a similar switch 4 to which the NE controllers, denoted in the whole by dashed-line block 5, are connected. In the example disclosed here, the NE controllers include a main controller 6 and a peripheral controller 7.

Main controller 6 is directly interfaced with NE manager 8 and is to forward configuration messages and requests to all peripheral cards in the NE. Specifically, main controller 6 is to forward management and proprietary messages, it receives from NE manager 8, towards L2 controller 3.

Peripheral controller 7 is the controller of the peripheral card. It interacts with L2 controller 3 and manages the EoS (Ethernet over SDH/SONET) part as well as the card as a whole, card equipment alarms (including L2 switch alarms, even concerning serious failures), and so on,

The invention essentially aims at guaranteeing a secure management of ports P_{CPU} and P_{MNG}, without disturbing the normal behaviour of switch 1, in order to protect controllers 5, 6 from attacks by malicious Ethernet users.

The goals that the secure management has to reach are summarised in the following points:
- management port P_{MNG} is the only enabled to send management messages [such as Simple Network Management Protocol (SNMP), Trivial File Transfer Protocol (tftp), proprietary messages...] to CPU port P_{CPU};
- CPU port P_{CPU} has to send SNMP, tftp and proprietary messages to MNG port P_{MNG} (messages for NE controllers), while it has to send protocol data unit (PDU) packets [such as BPDUs (Bridge PDUs) and other ones] towards all other enabled ports.
- all customer ports P1...Pn are not allowed to send traffic packets to P_{CPU} and P_{MNG};
- all customer ports P1...Pn are enabled to send their protocol data unit (PDU) packets [handling Spanning Tree Protocol (STP), MSTP (Multiple STP), Generic Attribute Registration Protocol (GARP) VLAN Registration Protocol (GVRP), Internet Group Management Protocol (IGMP) snooping, GARP Multicast Registration Protocol (GMRP)...] to CPU port P_{CPU} on demand (configuration requirement of enabling/disabling MSTP, GVRP, etc.).

The protocols listed above are mentioned only as examples of standard protocols used in connection with a MAC bridge. Further details can be found in the existing standards and technical specifications concerning MAC bridges and the components thereof. Besides the standards of the IEEE 802.1 and 802.3 series, we mention IETF:RFC (Internet Engineering Task Force: Requests For Comments) 1155, 1157, 1213, 1493, 1757.

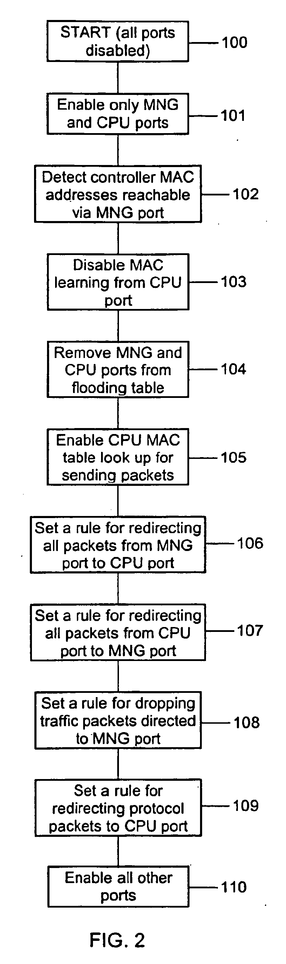

The secure management is obtained through the operations shown in the flow chart of Fig. 2. The description assumes that the Internet Protocol (IP) is used at the network layer, above the Data Link layer at which switch 2 operates.

The operations disclosed are carried out by L2 controller 3. They are to be performed after any "cold" start-up of switch device 2, when the device is wholly reset and all ports are configured by default in a disabled mode. The procedure is not to be performed in case of a "warm" start-up of controller 3, which leaves the configuration of switch 2 unchanged and which does not affect data traffic.

The starting condition, with all ports disabled, is shown at step 100 of the flow chart. After the start, the fist operation is the enabling of only ports P_{CPU} and P_{MNG} (step 101) to be connected in secure manner. Thereafter, a broadcast message [Address Resolution Protocol (ARP) message] is sent for allowing L2 controller 3 to know the NE controller's MAC addresses that are reachable via MNG port P_{MNG} (step 102), so that the proper correspondence can be established between the IP and the MAC addresses of the units concerned.

Then, MAC learning from CPU port P_{CPU} is disabled (step 103), so that none can send unicast messages to P_{CPU}, and ports P_{CPU} and P_{MNG} are removed from the flooding table (step 104), so that unknown packets and broadcast messages are not forwarded to such ports.

At step 105, CPU MAC table look up for sending packets is enabled. CPU port P_{CPU} uses the MAC table for forwarding packets. In this way L2 controller 3 can send data protocol packets to all other ports.

Then, a number of rules (steps 106 to 108) are set in order to allow packet exchange between ports P_{CPU} and P_{MNG} only.

A first rule (step 106) concerns processing of packets coming from MNG port P_{MNG} (packets having "source port identifier (ID) = MNG port ID") and defines the action "redirect all packets to CPU port". That is, all packets coming from P_{MNG} are made to arrive at CPU port P_{CPU}.

A second rule (step 107) is instead defined by the conditions "destination IP address = Controller IP addresses reachable via MNG port" and "source port ID = CPU port ID", and it defines the action "redirect all packets to MNG port". All packets with these IP addresses from P_{CPU} are redirected to P_{MNC}, if they have either a unicast or a multicast MAC address. The check on the IP address ensures that L2 controller 3 can send only messages actually intended for NE controllers 5 to _{MNG}. The check is to be made on the IP address, and not on the MAC address actually used in the switch, because otherwise the ARP messages would be blocked.

A third rule (step 108) is based on the condition "destination MAC address = Controller MAC addresses reachable via MNG port" and defines the action "drop packets". Thanks to such a rule, it will be impossible to send traffic packets to controllers 5 from customer ports P1...Pn through P_{CPU}. This rule must have lower priority than the previous one, to allow transmission of management packets from P_{CPU} to _{MNG}.

Then, a further group of rules (step 109) are set based on the type of packet (in particular "protocol" type packets) and the source port ID, to perform the action "redirection to CPU port". Those rules enable all customer ports to send their Protocol Data Units to CPU port.

At this point, all L2 device ports can be enabled (step 110) and switch 2 is ready to operate.

If the commercial switch indicated above is used, the rules of steps 106 to 109 can be implemented by using the flow paradigm offered by the device. In practice, the rules correspond to defining certain flows in a predetermined order (e.g., by assigning progressively increasing numerical identifiers to such flows) and to detecting whether any packet meet any said rule. Here, explicit reference is made to the situation depicted in Fig. 1, where a main controller 6 and a peripheral controller 7 are provided for. The flow identities set are as follows:
- I. **Flow ID 0:**: that identifier is assigned to a flow whose packets have "source port ID = MNG port ID" and implements the packet redirection to P_{CPU} of step 106;
- II. **Flow ID 1:**: it identifies a flow defined by "destination IP address = Main Controller IP address" and "source port ID = CPU port ID"; it performs the redirection to P_{MNG} of step 107 for packets directed from P_{CPU} to IP addresses of the main controller;
- III. **Flow ID 2:**: it identifies a flow defined by "destination IP address = Peripheral Controller IP address" and "source port ID = CPU port ID"; it performs the same action as that concerning Flow ID = 1, yet for packets directed from P_{CPU} to IP addresses of the peripheral controller. It is to be appreciated that two flows have been defined here, since two NE controllers 6, 7, need to access L2 controller 3. In general, a Flow ID has to be established for each NE controller that needs to access L2 controller 3.
- IV. **Flow IDs 3, 4:**: they identify flows defined by "destination MAC address = Main controller MAC address" and "destination MAC address = Peripheral controller MAC address", respectively, and implement the packet dropping of step 108. As to the existence of multiple Flow IDs, the same comments made above for the existence of Flow IDs 1, 2 apply. As said in connection with the description of the flow chart, the rules concerning Flow IDs 3, 4 must have lower priorities than rules II, III, in order that only P_{CPU} is enabled to send packets to P_{MNG} and hence to NE controllers 5.
- V. **Flow IDs 5...n:**: these rules define flows based on packet protocol type and source port ID and correspond to step 109. Note that it is necessary to define a flow per protocol type and per port.

At this point none is able to change these configurations and SNMP messages can be received only from MNG port. The only rules that can be changed at run time are flows ID5...n.

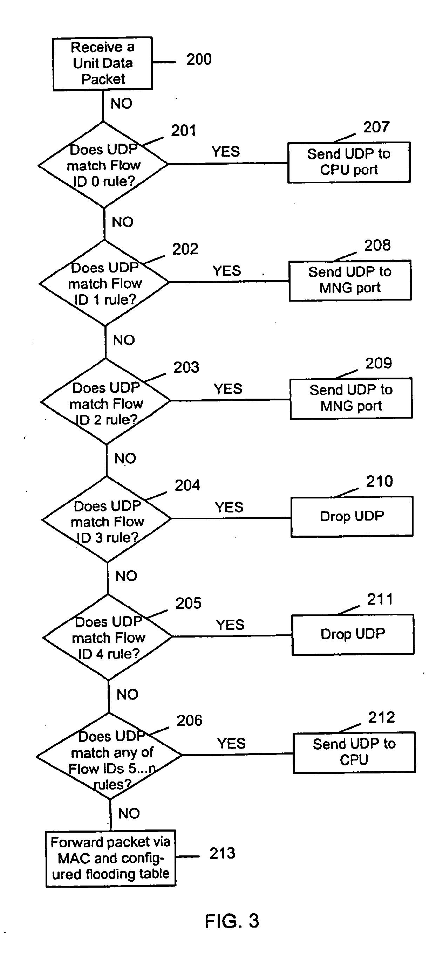

Fig. 3 shows the flow of a packet inside L2 switch 2 after application of the previous configurations and rules.

Step 200 is the reception of a packet. Steps 201 to 206 are the successive checks on whether the received packet belongs to any of the flows identified above. Steps 207 to 211 are the packet forwarding to ports P_{CPU}/P_{MNG} or the packet dropping resulting from the matching between the packet and any of the flow rules represented by IDs 0 to 4. Step 212 is the packet forwarding to L2 controller 3 in case the packet matches the flow rule represented by any of IDs 5...n. Lastly, step 213 is the processing of a traffic packet.

The flow chart is self-explanatory taking into account the previous description.

The above description clearly shows that the invention positively prevents access to the management port due to malicious or wrong operation of a customer, without affecting the normal operation of the bridge and without subtracting resources to the network users. Indeed, only management and protocol packets can reach P_{CPU} and hence L2 controller 3, and none can send to P_{CPU} broadcast or unknown packets that would be forwarded to all other ports, including P_{MNG}. At the same time a single port, P_{MNG}, is enabled to send management messages to P_{CPU}, whereas all ports can send dynamic protocol messages to P_{CPU}, as requested by the normal operation of the bridge. Moreover, since the invention is not based on the use of VLAN tags, it can be used also in VLAN unaware switches.

It is evident that the above description has been given by way of non-limiting example and that changes and modifications are possible without departing from the scope of the invention as defined by the appended claims.

Thus, use of a different component for switch 2 will obviously entail a different practical implementation of the packet processing rules. However such rules should always result in allowing exchange between the CPU and management ports P_{CPU}, P_{MNG} of packets relevant only to management messages, and in allowing forwarding of control packets only from the customer ports P1...Pn to the CPU port P_{CPU}, while any other packet directed to the CPU port should be dropped.

Of course, protocols other than IP protocol could be used at the upper layers of the protocol stack, so that the addresses conforming to such upper layer protocol will be considered in place of the IP addresses.

## Claims

1. A method of protecting access to a first port (P_{CPU}) in a switching unit (2) of a Medium Access Control, MAC, bridge (1) of a packet communication network, wherein said first port (P_{CPU}) has to exchange packets relevant to messages of a first type with a second port (PCPU, PMNG) and packets relevant to messages of a second type with further ports (P1...Pn), the method comprising the steps of:
- disabling (103) MAC learning from said first port (P_{CPU});
- removing (104) said first and second ports (P_{CPU}, P_{MNG}) from a flooding table of the bridge, to prevent transmission of unknown packets and broadcast messages to the same ports;
- setting packet processing rules (106 - 109), based on source ports, destination addresses and types of messages the packets arriving at the bridge (1) refer to, in order to allow access by said second port (P_{MNG}) to said first port (P_{CPU}) for the only exchange of packets relevant to said first message type, and to allow access by said further ports (P1...Pn) to said first port (P_{CPU}) for the only exchange of packets relevant to said second message type;
and being **characterised in that** said first port (P_{CPU}) is a control port to which a bridge controller (3) is connected, said second port (P_{MNG}) is a management port to which external managing units (5 - 8) are connected, said further ports (P1...Pn) are customer ports, said first message type includes management messages and said second message type includes dynamic protocol messages.

2. The method as claimed in claim 1, **characterised in that** the method further comprises, before said step of setting packet processing rules (106 - 109), the step of enabling (105) a MAC address table look up, to allow transmission of packets relevant to said dynamic protocol messages to said customer ports (P1...Pn).

3. The method as claimed in claim 1 or 2, **characterised in that** it is performed in an initialisation phase of the switching unit (2), starting from a disabled condition of all ports (PCPU, PMNG, P1...Pn) of the switching unit (2).

4. The method as claimed in claim 3, **characterised in that** it comprises an initial step (101) of enabling only said control and management ports (PCPU, PMNG), and a last step (110) of enabling also said customer ports (P1...Pn).

5. The method as claimed in any of claims 1 to 4, **characterised in that** it further comprises, before said removing step (104), the detection, by said controller (3), of MAC addresses reachable via said management port (P_{MNG}).

6. The method as claimed in any preceding claim, for a network where Internet protocol, IP, is used at a network layer above the MAC layer at which the bridge operates, **characterised in that** said rule setting step (106 - 109) comprises:
- setting a first rule (106), based on identifiers of packet source ports and causing redirection to said control port (P_{CPU}) of packets originating from said management port (P_{MNG});
- setting a second rule (107), based on IP destination addresses on identifiers of packet source ports, and causing redirection to said management port (P_{MNG}) of packets originating from said control port (P_{CPU}) and directed to said IP addresses reachable via said management port (P_{MNG});
- setting a third rule (108), based on MAC destination addresses and having lower priority than said second rule, and causing dropping of packets directed to MAC addresses reachable via said management port (P_{MNG});
- setting a group of fourth rules (109), based on packet protocol type and on identifiers of packet source ports and causing redirection to said control port (P_{CPU}) of dynamic protocol packets originating from said customer ports (P1...Pn).

7. The method as claimed in claim 6, **characterised in that** said step of setting a group of fourth rules (109) comprises setting a rule for each control packet type and each customer port.

8. The method as claimed in claim 6 or 7, **characterised in that** said rule setting steps (106 - 109) are performed by using a flow paradigm, whereby different flow identities are defined based on source ports, destination addresses and types of packets.

9. The method as claimed in claim 8, **characterised in that** a flow is defined for each IP address and each MAC address reachable via said management port (P_{MNG}).

10. The method as claimed in any preceding claim, **characterised in that** it further comprises protecting access also to said management port (P_{MNG}) to provide a secure connection between said control and management ports (P_{CPU}, P_{MNG}), and **in that**
- said disabling step includes disabling MAC learning also from said second port (P_{MNG}), to prevent forwarding of unicast messages to said ports; and
- said rule setting step includes setting rules, based on packet source ports, in order to allow redirection of packets originating from one of said control and management ports (P_{CPU}, P_{MNG}) to the other of said control and management ports (P_{CPU}, P_{MNG}).

11. A Medium Access Control, MAC, bridge (1 - 3) for a packet communication network, the bridge comprising a switching unit (2) with a first port (P_{CPU}) which has to exchange packets relevant to messages of a first type with a second port (P_{MNG}) and packets relevant to messages of a second type with further ports (P1...Pn), wherein, for providing a secure access to said first port (P_{CPU}), said bridge (1) is configured so that:
- MAC learning from said first port (P_{CPU}) is disabled, to prevent transmission of unicast messages to the port itself;
- said first and second ports (P_{CPU}, P_{MNG}) are not included in a flooding table, to prevent transmission of unknown packets and broadcast messages to the same ports;
- a set of packet processing rules, based on source ports, destination addresses and types of messages the packets arriving at the bridge switching unit (2) refer to, are stored in the bridge, said rules being such as to allow access by said second port (P_{MNG}) to said first port (P_{CPU}) for the only exchange of packets relevant to said first message type and to allow access by said further ports (P1...Pn) to said first port (P_{CPU}) for the only exchange of packets relevant to said second message type;
the bridge being **characterised in that**:
- said first port (P_{CPU}) is a control port to which a bridge controller (3) is connected, said controller (3) including said flooding and MAC tables and storing said rules;
- said second port (P_{MNG}) is a management port to which external managing units (5 - 8) are connected;
- said further ports (P1...Pn) are customer ports devoted to handling data traffic coming from the customers;
- said first message type includes management messages; and
- said second message type includes dynamic protocol messages.

12. The bridge as claimed in claim 11, **characterised in that** said bridge (1) is further configured so that look up of a MAC table is enabled, to allow transmission of said packets relevant to dynamic protocol messages to said customer ports (P1...Pn).

13. The bridge as claimed in claim 11 or 12, **characterised in that** said bridge controller (3) is arranged to configure the bridge (1) in an initialisation phase, starting from a disabled condition of all ports (P_{CPU}, P_{MNG}. P1...Pn) of the switching unit (2), and further arranged to initially enable only said control and management ports (P_{CPU}, P_{MNG}) and to enable said customer ports (P1...Pn) after having set said packet processing rules.

14. The bridge as claimed in aby of claims 11 to 13, **characterised in that**, after setting of said packet processing rules, the bridge (1) is configured so that, in operation, upon reception of a packet:
- the packet is forwarded (207) to the control port (P_{CPU}) if the source port is the management port (P_{MNG});
- the packet is forwarded to the management port (P_{MNG}) if the source port is the control port (P_{CPU}) and the destination address is an upper protocol layer address reachable through the management port (P_{MNG});
- the packet is dropped if the destination address is a MAC address reachable through the management port (P_{MNG});
- the packet is forwarded to the control port (P_{CPU}) if it is a dynamic protocol packet coming from one of the customer ports (P1...Pn);
- the packet is forwarded to one or more customer ports (P1...Pn), as defined by a MAC address table and a flood table, if it is a traffic packet.

15. The bridge as claimed in any of claims 11 to 14, wherein the network is one where Internet protocol, IP, is used at upper protocol layers above the MAC layer at which the bridge (1) operates, **characterised in that** said bridge controller (3) is arranged to:
- set a first rule, based on identifiers of packet source ports, to cause redirection of packets originating from said management port (P_{MNG}) to said control port (P_{CPU});
- set a second rule, based on IP destination addresses and on source port identifiers of the packets, to cause redirection to said management port (P_{MNG}) of packets originating from said control port (P_{CPU}) and directed to IP addresses reachable via said management port (P_{MNG});
- set a third rule, based on MAC destination addresses of the packets and having lower priority than said second rule, to cause dropping of packets directed to MAC addresses reachable via said management port (P_{MNG});
- set a group of fourth rules, based on protocol type and on identifiers of packet source ports, to cause redirection of dynamic protocol packets originating from said customer ports (P1...Pn) to said control port (P_{CPU}).

16. The bridge as claimed in claim 15, **characterised in that** said controller (3) is arranged to set said rules by using a flow paradigm, whereby different flow identities are defined based on source ports, destination addresses and types of the packets.

17. The bridge as claimed in claim 16, **characterised in that** said controller (3) is arranged to define a flow for each IP and MAC address reachable via said management port (P_{MNG}) and a flow for each protocol type and for each customer port sending dynamic protocol packets to said control port (P_{CPU}).

18. The bridge as claimed in any of claims 11 to 17, **characterised in that** said bridge (1) is a peripheral card of a network element associated with a network element manager (8), which communicates with said bridge controller (3) through network element controllers (5 - 7) connected to ports of a further switching unit (4) connected in turn to said management port (P_{MNG}).

## Patentansprüche

1. Verfahren zum Schützen des Zugriffs auf einen ersten Port (PCPU) in einer Switching-Einheit (2) einer Brücke (1) der Mediumzugriffskontrolle MAC eines Paketkommunikationsnetzes, wobei der erste Port (PCPU) Pakete, die für Nachrichten eines ersten Typs relevant sind, mit einem zweiten Port (PCPU, PMNG) und Pakete, die für Nachrichten eines zweiten Typs relevant sind, mit weiteren Ports (P1...Pn) austauschen muß, wobei das Verfahren die folgenden Schritte umfaßt:
Sperren (103) des MAC-Lernens von dem ersten Port (P_{CPU}) ;
Entfernen (104) des ersten und des zweiten Ports (P_{CPU}, P_{MNG}) aus einer Flooding-Tabelle der Brücke, um die Übertragung von unbekannten Paketen und rundgesendeten Nachrichten zu denselben Ports zu verhindern;
Setzen von Paketverarbeitungsregeln (106 - 109) auf der Basis von Quellenports, Zieladressen und Typen von Nachrichten, auf die sich die an der Brücke (1) ankommenden Pakete beziehen, um den Zugriff des zweiten Ports (P_{MNG}) auf den ersten Port (P_{CPU}) für den ausschließlichen Austausch von für den ersten Nachrichtentyp relevanten Paketen zu erlauben und um den Zugriff der weiteren Ports (P1...Pn) auf den ersten Port (P_{CPU}) für den ausschließlichen Austausch von für den zweiten Nachrichtentyp relevanten Paketen zu erlauben;
und **dadurch gekennzeichnet, daß** der erste Port (P_{CPU}) ein Steuerport ist, mit dem eine Brückensteuerung (3) verbunden ist, wobei der zweite Port (P_{MNG}) ein Verwaltungsport ist, mit dem externe Verwaltungseinheiten (5 - 8) verbunden sind, wobei die weiteren Ports (P1...Pn) Kundenports sind, wobei der erste Nachrichtentyp Verwaltungsnachrichten umfaßt und der zweite Nachrichtentyp dynamische Protokollnachrichten umfaßt.

2. Verfahren nach Anspruch 1, **dadurch gekennzeichnet, daß** das Verfahren ferner vor dem Schritt des Setzens von Paketverarbeitungsregeln (106 - 109) den Schritt des Freigebens (105) eines MAC-Adressentabellennachschlagens umfaßt, um die Übertragung von für die dynamischen Protokollnachrichten relevanten Paketen zu den Kundenports (P1...Pn) zu erlauben.

3. Verfahren nach Anspruch 1 oder 2, **dadurch gekennzeichnet, daß** es in einer Initialisierungsphase der Switching-Einheit (2) beginnend mit einem gesperrten Zustand aller Ports (PCPU, PMNG, P1...Pn) der Switching-Einheit (2) ausgeführt wird.

4. Verfahren nach Anspruch 3, **dadurch gekennzeichnet, daß** es einen anfänglichen Schritt (101) des Freigebens nur der Steuer- und Verwaltungsports (PCPU, PMNG) und einen letzten Schritt (110) des Freigebens auch der Kundenports (P1...Pn) umfaßt.

5. Verfahren nach einem der Ansprüche 1 bis 4, **dadurch gekennzeichnet, daß** es ferner vor dem Entfernungsschritt (104) die Detektion von über den Verwaltungsport (P_{MNG}) erreichbaren MAC-Adressen durch die Steuerung (3) umfaßt.

6. Verfahren nach einem der vorhergehenden Ansprüche für ein Netzwerk, in dem das Internet-Protokoll IP in einer Netzwerkschicht über der MAC-Schicht, auf der die Brücke operiert, verwendet wird, **dadurch gekennzeichnet, daß** der Schritt (106 - 109) des Setzens von Regeln folgendes umfaßt:
Setzen einer ersten Regel (106) auf der Basis von Kennungen von Paketquellenports und Bewirken einer Weiterleitung zu dem Steuerport (P_{CPU}) von Paketen, die aus dem Verwaltungsport (P_{MNG}) stammen;
Setzen einer zweiten Regel (107) auf der Basis von IP-Zieladressen an Kennungen von Paketquellenports und Bewirken einer Weiterleitung zu dem Verwaltungsport (P_{MNG}) von Paketen, die aus dem Steuerport (P_{CPU}) stammen und an über den Verwaltungsport (P_{MNG}) erreichbare IP-Adressen gerichtet sind;
Setzen einer dritten Regel (108) auf der Basis von MAC-Zieladressen und mit einer niedrigeren Priorität als die zweite Regel und Bewirken des Abwerfens von Paketen, die an über den Verwaltungsport (P_{MNG}) erreichbare MAC-Adressen gerichtet sind;
Setzen einer Gruppe von vierten Regeln (109) auf der Basis des Paketprotokolltyps und von Kennungen von Paketquellenports und Bewirken einer Weiterleitung zu dem Steuerport (P_{CPU}) von dynamischen Protokollpaketen, die aus den Kundenports (P1...Pn) stammen.

7. Verfahren nach Anspruch 6, **dadurch gekennzeichnet, daß** der Schritt des Setzens einer Gruppe von vierten Regeln (109) umfaßt, für jeden Steuerpakettyp und jeden Kundenport eine Regel zu setzen.

8. Verfahren nach Anspruch 6 oder 7, **dadurch gekennzeichnet, daß** die Regelsetzschritte (106 - 109) durch Verwendung eines Flußparadigmas ausgeführt werden, wobei auf der Basis von Quellenports, Zieladressen und Typen von Paketen verschiedene Flußidentitäten definiert werden.

9. Verfahren nach Anspruch 8, **dadurch gekennzeichnet, daß** für jede IP-Adresse und jede MAC-Adresse, die über den Verwaltungsport (P_{MNG}) erreichbar ist, ein Fluß definiert wird.

10. Verfahren nach einem der vorhergehenden Ansprüche, **dadurch gekennzeichnet, daß** es ferner umfaßt, den Zugriff auch auf den Verwaltungsport (P_{MNG}) zu schützen, um eine sichere Verbindung zwischen dem Steuer- und dem Verwaltungsport (P_{CPU}, P_{MNG}) bereitzustellen, und daß
der Schritt des Sperrens umfaßt, MAC-Lernen auch von dem zweiten Port (P_{MNG}) zu sperren, um eine Weiterleitung von Unicast-Nachrichten zu den Ports zu verhindern; und
der Regelsetzschritt umfaßt, auf der Basis von Paketquellenports Regeln zu setzen, um eine Umlenkung von aus einem des Steuer- und des Verwaltungsports (P_{CPU}, P_{MNG}) stammenden Paketen zu dem anderen des Steuer- und des Verwaltungsports (P_{CPU}, P_{MNG}) zu ermöglichen.

11. Brücke (1 - 3) der Mediumzugriffskontrolle MAC für ein Paketkommunikationsnetz, wobei die Brücke eine Switching-Einheit (2) mit einem ersten Port (P_{CPU}) umfaßt, der für Nachrichten eines ersten Typs relevante Pakete mit einem zweiten Port (P_{MNG}) austauschen und für Nachrichten eines zweiten Typs relevante Pakete mit weiteren Ports (P1...Pn) austauschen muß, wobei zur Bereitstellung eines sicheren Zugriffs auf den ersten Port (P_{CPU}) die Brücke (1) für folgendes ausgelegt ist:
MAC-Lernen von dem ersten Port (P_{CPU}) wird gesperrt, um die Übertragung von Unicast-Nachrichten zu dem Port selbst zu verhindern;
der erste und der zweite Port (P_{CPU}, P_{MNG}) sind nicht in einer Flooding-Tabelle enthalten, um die Übertragung unbekannter Pakete und rundgesendeter Pakete zu denselben Ports zu verhindern;
in der Brücke wird eine Menge von Paketverarbeitungsregeln auf der Basis von Quellenports, Zieladressen und Typen von Nachrichten, auf die sich die an der Brücke (1) ankommenden Pakete beziehen, gespeichert, wobei die Regeln dergestalt sind, daß der Zugriff durch den zweiten Port (P_{MNG}) auf den ersten Port (P_{CPU}) für den ausschließlichen Austausch von für den ersten Nachrichtentyp relevanten Paketen erlaubt wird und der Zugriff der weiteren Ports (P1...Pn) auf den ersten Port (P_{CPU}) für den ausschließlichen Austausch von für den zweiten Nachrichtentyp relevanten Paketen erlaubt wird;
wobei die Brücke **dadurch gekennzeichnet ist, daß**
der erste Port (P_{CPU}) ein Steuerport ist, mit dem eine Brückensteuerung (3) verbunden ist, wobei die Steuerung (3) die Flooding- und MAC-Tabellen enthält und die Regeln speichert;
der zweite Port (P_{MNG}) ein Verwaltungsport ist, mit dem externe Verwaltungseinheiten (5 - 8) verbunden sind;
die weiteren Ports (P1...Pn) Kundenports sind, die der Abwicklung von von den Kunden kommendem Datenverkehr gewidmet sind;
der erste Nachrichtentyp Verwaltungsnachrichten umfaßt; und
der zweite Nachrichtentyp dynamische Protokollnachrichten umfaßt.

12. Brücke nach Anspruch 11, **dadurch gekennzeichnet, daß** die Brücke (1) ferner so ausgelegt ist, daß Nachschlagen einer MAC-Tabelle freigegeben ist, um die Übertragung der für dynamische Protokollnachrichten relevanten Pakete zu den Kundenports (P1...Pn) zu erlauben.

13. Brücke nach Anspruch 11 oder 12, **dadurch gekennzeichnet, daß** die Brückensteuerung (3) dafür ausgelegt ist, die Brücke (1) in einer Initialisierungsphase beginnend mit einem gesperrten Zustand aller Ports (P_{CPU}, P_{MNG}, P1...Pn) der Switching-Einheit (2) zu konfigurieren und ferner dafür ausgelegt ist, anfänglich nur den Steuer- und den Verwaltungsport (P_{CPU}, P_{MNG}) freizugeben und die Kundenports (P1...Pn) freizugeben, nachdem die Paketverarbeitungsregeln gesetzt wurden.

14. Brücke nach einem der Ansprüche 11 bis 13, **dadurch gekennzeichnet, daß** die Brücke (1) so ausgelegt ist, daß nach dem Setzen der Paketverarbeitungsregeln im Betrieb bei Empfang eines Pakets folgendes geschieht:
das Paket wird zu dem Steuerport (P_{CPU}) weitergeleitet (207), wenn der Quellenport der Verwaltungsport (P_{MNG}) ist;
das Paket wird zu dem Verwaltungsport (P_{MNG}) weitergeleitet, wenn der Quellenport der Steuerport (P_{CPU}) ist und die Zieladresse eine durch den Verwaltungsport (P_{MNG}) erreichbare Adresse der oberen Protokollschicht ist;
das Paket wird abgeworfen, wenn die Zieladresse eine durch den Verwaltungsport (P_{MNG}) erreichbare MAC-Adresse ist;
das Paket wird zu dem Steuerport (P_{CPU}) weitergeleitet, wenn es ein von einem der Kundenports (P1...Pn) kommendes dynamisches Protokollpaket ist;
das Paket wird wie durch eine MAC-Adressentabelle und eine Flood-Tabelle definiert zu einem oder mehreren Kundenports (P1...Pn) weitergeleitet, wenn es ein Verkehrspaket ist.

15. Brücke nach einem der Ansprüche 11 bis 14, wobei das Netzwerk ein Netzwerk ist, in dem das Internet-Protokoll IP in den oberen Schichten über der MAC-Schicht, in der die Brücke (1) wirkt, verwendet wird, **dadurch gekennzeichnet, daß** die Brückensteuerung (3) für folgendes ausgelegt ist:
Setzen einer ersten Regel auf der Basis von Kennungen von Paketquellenports, um eine Umlenkung von aus dem Verwaltungsport (P_{MNG}) stammenden Paketen zu dem Steuerport (P_{CPU}) zu bewirken;
Setzen einer zweiten Regel auf der Basis von IP-Zieladressen und Paketquellenportkennungen der Pakete, um eine Umlenkung von Paketen, die aus dem Steuerport (P_{CPU}) stammen und an über den Verwaltungsport (P_{MNG}) erreichbare IP-Adressen gerichtet sind, zu dem Verwaltungsport (P_{MNG}) zu bewirken;
Setzen einer dritten Regel auf der Basis von MAC-Zieladressen der Pakete und mit einer niedrigeren Priorität als die zweite Regel, um ein Abwerfen von Paketen, die an über den Verwaltungsport (P_{MNG}) erreichbare MAC-Adressen gerichtet sind, zu bewirken;
Setzen einer Gruppe von vierten Regeln auf der Basis des Paketprotokolltyps und von Kennungen von Paketquellenports, um eine Weiterleitung von dynamischen Protokollpaketen, die aus den Kundenports (P1...Pn) stammen, zu dem Steuerport (P_{CPU}) zu bewirken.

16. Brücke nach Anspruch 15, **dadurch gekennzeichnet, daß** die Steuerung (3) dafür ausgelegt ist, die Regeln unter Verwendung eines Flußparadigmas zu setzen, wobei auf der Basis von Quellenports, Zieladressen und Typen von Paketen verschiedene Flußidentitäten definiert werden.

17. Brücke nach Anspruch 16, **dadurch gekennzeichnet, daß** die Steuerung (3) dafür ausgelegt ist, für jede IP- und MAC-Adresse, die über den Verwaltungsport (P_{MNG}) erreichbar ist, einen Fluß und für jeden Protokolltyp und für jeden Kundenport, der dynamische Protokollpakete zu dem Steuerport (P_{CPU}) sendet, einen Fluß zu definieren.

18. Brücke nach einem der Ansprüche 11 bis 17, **dadurch gekennzeichnet, daß** die Brücke (1) eine Peripheriekarte eines mit einem Netzwerkelementmanager (8) assoziierten Netzwerkelements ist, die durch Netzwerkelementsteuerungen (5 - 7), die mit Ports einer weiteren Switching-Einheit (4) verbunden sind, die ihrerseits mit dem Verwaltungsport (P_{MNG}) verbunden ist, mit der Brückensteuerung (3) kommuniziert.

## Revendications

1. Procédé pour protéger l'accès à un premier port (PCPU) dans une unité de commutation (2) d'un pont de contrôle d'accès au support (MAC : *Medium Access Control*) (1) d'un réseau de communication par paquets, dans lequel ledit premier port (PCPU) doit échanger des paquets en rapport avec des messages d'un premier type avec un deuxième port (PCPU, PMNG) et des paquets en rapport avec des messages d'un second type avec d'autres ports (P1...Pn), le procédé comprenant les étapes consistant à :
- désactiver (103) l'apprentissage MAC par ledit premier port (P_{CPU}) ;
- supprimer (104) lesdits premier et deuxième ports (P_{CPU}, P_{MNG}) d'une table d'inondation du pont pour empêcher la transmission de paquets inconnus et de messages de diffusion à ces mêmes ports ;
- établir des règles de traitement des paquets (106 - 109) basées sur les ports source, les adresses de destination et les types de messages auxquels se réfèrent les paquets arrivant au niveau du pont (1) afin de permettre l'accès dudit deuxième port (P_{MNG}) audit premier port (P_{CPU}) pour le seul échange de paquets en rapport avec ledit premier type de messages et de permettre l'accès desdits autres ports (P1...Pn) audit premier port (P_{CPU}) pour le seul échange de paquets en rapport avec ledit second type de messages ;
et **caractérisé en ce que** ledit premier port (P_{CPU}) est un port de commande auquel est connecté un contrôleur de pont (3), ledit deuxième port (P_{MNG}) est un port de gestion auquel sont connectées des unités de gestion extérieures (5 - 8), lesdits autres ports (P1...Pn) sont des ports d'abonnés, ledit premier type de messages inclut des messages de gestion et ledit second type de messages inclut des messages de protocole dynamique.

2. Procédé selon la revendication 1, **caractérisé en ce que** le procédé comprend, en outre, avant ladite étape d'établissement de règles de traitement des paquets (106 - 109), l'étape d'activation (105) d'une consultation de table d'adresses MAC pour permettre la transmission de paquets en rapport avec lesdits messages de protocole dynamique auxdits ports d'abonnés (P1...Pn).

3. Procédé selon la revendication 1 ou 2, **caractérisé en ce qu'**il est exécuté dans une phase d'initialisation de l'unité de commutation (2) en partant d'un état désactivé de tous les ports (PCPU, PMNG, P1...Pn) de l'unité de commutation (2).

4. Procédé selon la revendication 3, **caractérisé en ce qu'**il comprend une étape initiale (101) consistant à activer seulement lesdits ports de commande et de gestion (PCPU, PMNG) et une dernière étape (110) consistant à activer également lesdits ports d'abonnés (P1...Pn).

5. Procédé selon l'une quelconque des revendications 1 à 4, **caractérisé en ce qu'**il comprend, en outre, avant ladite étape de suppression (104), la détection par ledit contrôleur (3) d'adresses MAC joignables par le biais dudit port de gestion (P_{MNG}).

6. Procédé selon l'une quelconque des revendications précédentes, pour un réseau où le protocole Internet, IP, est utilisé au niveau d'une couche réseau au-dessus de la couche MAC au niveau de laquelle le pont opère, **caractérisé en ce que** ladite étape d'établissement de règles (106 - 109) comprend :
- l'établissement d'une première règle (106) basée sur des identifiants de ports source de paquets et entraînant un réacheminement vers ledit port de commande (P_{CPU}) des paquets originaires dudit port de gestion (P_{MNG}) ;
- l'établissement d'une deuxième règle (107) basée sur des adresses de destination IP et des identifiants de ports source de paquets et entraînant un réacheminement vers ledit port de gestion (P_{MNG}) des paquets originaires dudit port de commande (P_{CPU}) et envoyés auxdites adresses IP joignables par le biais dudit port de gestion (P_{MNG}) ;
- l'établissement d'une troisième règle (108) basée sur des adresses de destination MAC et de priorité inférieure à ladite deuxième règle, et qui entraîne un abandon des paquets envoyés à des adresses MAC joignables par le biais dudit port de gestion (P_{MNG}) ;
- l'établissement d'un groupe de quatrièmes règles (109) basées sur le type de protocole de paquets et sur des identifiants de ports source de paquets et entraînant un réacheminement vers ledit port de commande (P_{CPU}) de paquets de protocole dynamique originaires desdits ports d'abonnés (P1...Pn).

7. Procédé selon la revendication 6, **caractérisé en ce que** ladite étape d'établissement d'un groupe de quatrièmes règles (109) comprend l'établissement d'une règle pour chaque type de paquet de commande et chaque port d'abonné.

8. Procédé selon la revendication 6 ou 7, **caractérisé en ce que** lesdites étapes d'établissement de règles (106 - 109) sont exécutées en utilisant un paradigme de flux, différentes identités de flux étant définies sur la base de ports source, d'adresses de destination et de types de paquets.

9. Procédé selon la revendication 8, **caractérisé en ce qu'**un flux est défini pour chaque adresse IP et chaque adresse MAC joignable par le biais dudit port de gestion (P_{MNG}).

10. Procédé selon l'une quelconque des revendications précédentes, **caractérisé en ce qu'**il comprend, en outre, la protection de l'accès audit port de gestion (P_{MNG}) également pour fournir une connexion sécurisée entre lesdits ports de commande et de gestion (P_{CPU}, P_{MNG}) et **en ce que** :
- ladite étape de désactivation inclut la désactivation de l'apprentissage MAC par ledit deuxième port (P_{MNG}) également pour empêcher l'envoi de messages unicast auxdits ports ; et
- ladite étape d'établissement de règles inclut l'établissement de règles basées sur des ports source de paquets pour permettre un réacheminement des paquets originaires de l'un desdits ports de commande et de gestion (P_{CPU}, P_{MNG}) vers l'autre desdits ports de commande et de gestion (P_{CPU}, P_{MNG}).

11. Pont de contrôle d'accès au support (MAC) (1 - 3) pour un réseau de communication par paquets, le pont comprenant une unité de commutation (2) pourvue d'un premier port (P_{CPU}) qui doit échanger des paquets en rapport avec des messages d'un premier type avec un deuxième port (P_{MNG}) et des paquets en rapport avec des messages d'un second type avec d'autres ports (P1...Pn), dans lequel, pour fournir un accès sécurisé audit premier port (P_{CPU}), ledit pont (1) est configuré de manière à ce que :
- l'apprentissage MAC par ledit premier port (P_{CPU}) soit désactivé pour empêcher une transmission de messages unicast au port lui-même ;
- lesdits premier et deuxième ports (P_{CPU}, P_{MNG}) ne soient pas inclus dans une table d'inondation afin d'empêcher une transmission de paquets inconnus et de messages de diffusion à ces mêmes ports ;
- un ensemble de règles de traitement des paquets basées sur les ports source, les adresses de destination et les types de messages auxquels se réfèrent les paquets arrivant au niveau de l'unité de commutation de pont (2) soit mémorisé dans le pont, lesdites règles étant telles qu'elles permettent l'accès dudit deuxième port (P_{MNG}) audit premier port (P_{CPU}) pour le seul échange de paquets en rapport avec ledit premier type de messages et qu'elles permettent l'accès desdits autres ports (P1...Pn) audit premier port (P_{CPU}) pour le seul échange de paquets en rapport avec ledit second type de messages ;
le pont étant **caractérisé en ce que** :
- ledit premier port (P_{CPU}) est un port de commande auquel est connecté un contrôleur de pont (3), ledit contrôleur (3) incluant lesdites tables d'inondation et MAC et mémorisant lesdites règles ;
- ledit deuxième port (P_{MNG}) est un port de gestion auquel sont connectées des unités de gestion extérieures (5 - 8) ;
- lesdits autres ports (P1...Pn) sont des ports d'abonnés consacrés au traitement du trafic de données venant des abonnés ;
- ledit premier type de messages inclut des messages de gestion ; et
- ledit second type de messages inclut des messages de protocole dynamique.

12. Pont selon la revendication 11, **caractérisé en ce que** ledit pont (1) est configuré, en outre, de manière à ce que la consultation d'une table MAC soit activée pour permettre une transmission desdits paquets en rapport avec des messages de protocole dynamique auxdits ports d'abonnés (P1...Pn).

13. Pont selon la revendication 11 ou 12, **caractérisé en ce que** ledit contrôleur de pont (3) est adapté pour configurer le pont (1) dans une phase d'initialisation en partant d'un état désactivé de tous les ports (P_{CPU}, P_{MNG}, P1...Pn) de l'unité de commutation (2) et adapté, en outre, pour n'activer initialement que lesdits ports de commande et de gestion (P_{CPU}, P_{MNG}) et pour activer lesdits ports d'abonnés (P1...Pn) après avoir établi lesdites règles de traitement des paquets.

14. Pont selon l'une quelconque des revendications 11 à 13, **caractérisé en ce que**, après l'établissement desdites règles de traitement des paquets, le pont (1) est configuré de manière à ce que, à la réception d'un paquet, lorsque le pont fonctionne :
- le paquet soit envoyé (207) au port de commande (P_{CPU}) si le port source est le port de gestion (P_{MNG}) ;
- le paquet soit envoyé au port de gestion (P_{MNG}) si le port source est le port de commande (P_{CPU}) et l'adresse de destination est une adresse de couche de protocole supérieure joignable par le biais du port de gestion (P_{MNG}) ;
- le paquet soit abandonné si l'adresse de destination est une adresse MAC joignable par le biais du port de gestion (P_{MNG}) ;
- le paquet soit envoyé au port de commande (P_{CPU}) s'il s'agit d'un paquet de protocole dynamique venant de l'un des ports d'abonnés (P1...Pn) ;
- le paquet soit envoyé à un ou plusieurs port(s) d'abonné(s) (P1...Pn), défini (s) par une table d'adresses MAC et une table d'inondation, s'il s'agit d'un paquet de trafic.

15. Pont selon l'une quelconque des revendications 11 à 14, dans lequel le réseau est un réseau où le protocole Internet, IP, est utilisé au niveau de couches de protocole supérieures au-dessus de la couche MAC au niveau de laquelle le pont (1) opère, **caractérisé en ce que** ledit contrôleur de pont (3) est adapté pour :
- établir une première règle, basée sur des identifiants de ports source de paquets, pour entraîner un réacheminement des paquets originaires dudit port de gestion (P_{MNG}) vers ledit port de commande (P_{CPU}) ;
- établir une deuxième règle, basée sur des adresses de destination IP et sur des identifiants de ports source des paquets, pour entraîner un réacheminement vers ledit port de gestion (P_{MNG}) des paquets originaires dudit port de commande (P_{CPU}) et envoyés à des adresses IP joignables par le biais dudit port de gestion (P_{MNG}) ;
- établir une troisième règle, basée sur des adresses de destination MAC des paquets et de priorité inférieure à ladite deuxième règle, pour entraîner un abandon des paquets envoyés à des adresses MAC joignables par le biais dudit port de gestion (P_{MNG}) ;
- établir un groupe de quatrièmes règles, basées sur le type de protocole et sur des identifiants de ports source de paquets, pour provoquer un réacheminement des paquets de protocole dynamique originaires desdits ports d'abonnés (P1...Pn) vers ledit port de commande (P_{CPU}).

16. Pont selon la revendication 15, **caractérisé en ce que** ledit contrôleur (3) est adapté pour établir lesdites règles en utilisant un paradigme de flux, des identités de flux différentes étant définies sur la base de ports source, d'adresses de destination et de types de paquets.

17. Pont selon la revendication 16, **caractérisé en ce que** ledit contrôleur (3) est adapté pour définir un flux pour chaque adresse IP et MAC joignable par le biais dudit port de gestion (P_{MNG}) et un flux pour chaque type de protocole et pour chaque port d'abonné envoyant des paquets de protocole dynamique audit port de commande (P_{CPU}).

18. Pont selon l'une quelconque des revendications 11 à 17, **caractérisé en ce que** ledit pont (1) est une carte périphérique d'un élément de réseau associé à un gestionnaire d'éléments de réseau (8) qui communique avec ledit contrôleur de pont (3) par le biais de contrôleurs d'éléments de réseau (5 - 7) connectés à des ports d'une autre unité de commutation (4) connectée à son tour audit port de gestion (P_{MNG}).
